# EUROPEAN PATENT SPECIFICATION

(11) **EP 1 257 915 B1**
(45) Date of publication and mention of the grant of the patent: **28.01.2015**
(21) Application number: 00946726.7
(22) Date of filing: 06.07.2000
(51) Int. Cl.: G06F 9/445

(54) **METHOD AND APPARATUS FOR UPGRADING FIRMWARE IN AN EMBEDDED SYSTEM**
VERFAHREN UND VORRICHTUNG ZUR AKTUALISIERUNG VON FIRMWARE IN EINEM EINGEBETTETEN SYSTEM
PROCEDE ET DISPOSITIF DE MISE A NIVEAU DE MICROLOGICIEL DANS UN SYSTEME INTEGRE

(30) Priority: 08.07.1999 SE 9902644
(43) Date of publication of application: 20.11.2002
(73) Proprietor: Axis AB, 223 69 Lund (SE)
(72) Inventor: STEN, Per, S-227 30 Lund (SE); STARVIK, Mikael, S-214 45 Malmö (SE)
(74) Representative: Ahlberg, Lena Camilla
(86) International application number: PCT/SE2000/001450
(87) International publication number: WO 2001/004749

(56) References cited:
- EP-A1- 0 601 704
- WO-A1-96/32679
- US-A- 4 982 430
- US-A- 5 452 454
- US-A- 5 812 857
- US-A- 5 887 164
- ALEX OSADZINSKI: "The Network File System (NFS)", 1988, COMPUTER STANDARDS & INTERFACES, AMSTERDAM, THE NETHERLANDS, XP000051969,

## Description

### Technical field of the invention

The present invention relates to a method for upgrading firmware of an embedded system via a network connection. Further, the present invention relates to an embedded system provided with means for upgrading firmware received over a network, comprising; a volatile memory, a persistent memory, and a protocol stack for communication over a network.

### Background of the Invention

The technology of data communication develops fast and the computer networks are expanding and consist of an increasing number of clients and servers.

Users and owners of networks require that servers and the embedded systems thereof are up to date in accordance with the rapidly changing data communication technology. Further, an increasing part of the development of embedded systems is today performed as development of firmware. Because of the rapid development of data communication technologies and requirements of new functionality from users the firmware of an embedded system has to be upgraded frequently.

Further, the use of computer networks is increasing, and today almost every company has a computer network of their own, or is at least connected to one. The increasing number of computer networks results in an increasing number of individuals responsible for the daily maintenance of networks. Many of those individuals are not specialised in computers or computer communications.

Thus, the rapid development of computer communication technologies and products, and the increasing number of individuals responsible for the daily maintenance require that the firmware upgrade of the servers can be performed in a way that is easy and secure, in respect of low error probability.

The upgrading of firmware is today commonly managed by connecting a computer direct to the embedded system. Further it is known to perform upgrading of firmware over the network which the server is connected to.

A significant problem in upgrading the firmware of known embedded systems is that the individual performing the upgrade has to have detailed knowledge of the computer network and the embedded system and have to perform a number of rather complicated steps. Most individuals are not confident in performing said steps and are not confident in using all numerals and characteristics required to be input when performing the firmware upgrade. Further, the upgrading requires a specially designed program within the client to download the firmware upgrade to the embedded system. These aspects make the operation of upgrading firmware of an embedded system difficult and time consuming for an individual, especially if the individual is not specially skilled in the art of computers and computer communications. In the known art an upgrade file is downloaded to the embedded system by means of a file transfer protocol. The download is performed with a special purpose program and the individual performing the download is required to specify, for example, where, in the form of a network address, the data is to be sent.

Another common problem, when upgrading firmware in embedded systems, is the risk of communication failure during the firmware download. Such failure could render the embedded system inoperative, thus requiring considerate efforts to repair.

US 5 812 857 discloses a method for upgrading a download code set, where an embedded system uses the same network drivers as when in normal operation. Further it describes a download where different portions of the code set are downloaded during different steps of the downloading operation. Some portions of the code set are downloaded to a flash memory via a volatile memory while some portions are downloaded directly to the flash memory. There is also described that a temporary downloader, downloaded during an initial step and replaced by yet another downloader during a later step, is used during the operation of download. The described system and method is designed for minimising the time of executing code out of volatile memory to the persistent memory and is rather complicated.

WO 96/32679 discloses a method for upgrading firmware of an enbedded system over a network connection.

### Summary of the Invention

The object of the present invention is to provide a new and improved method for upgrading firmware in an embedded system and a new and improved embedded system, in respect of upgrading firmware.

Another object of the invention is to provide a firmware upgrading method that is easy to use and that saves time.

Yet another object of the invention is to provide a firmware upgrading method in which the probability of an erroneous upgrade is minimised.

These objects, as well as other objects that will become apparent from the description below, are accomplished by a method according to claim 1 and by an embedded system according to claim 14. Preferred embodiments of the invention are disclosed in the dependent claims.

Within the context of the invention the term embedded system denotes a special-purpose computer built into and integral to a server device. Wherein the server device can be, for example, a CD-server, a printer server, a file server, a communication server, etc.

According to the invention, a virtual file system is used in the embedded system. This leads to the advantage that the individual starting the upgrade can be working in a well-known environment and can be able to use the same commands as when handling files within the client computer. Such handling of files within the client system is performed daily by users of computers, thus, the individual is probably familiar with performing such handling and thereby the system according to the invention can be time saving.

Further, by using a virtual file system within an embedded system a simple way of transferring a file from the client computer to the embedded system can be used, e.g. by sharing the virtual file system with the client computer. Sharing a file system shall be interpreted as the file system being arranged in such a way that it can be used within a client computer and be handled as if it was a part of the file system of that client computer.

Yet another advantage of the invention is that the protocol stack of the embedded system can be the same for both the normal operation of the server and the upgrading operation. Thus, it is possible to save space in the persistent memory of the embedded system. It is to be understood that the virtual file system is operating independently of the protocol stack currently in use.

By storing the data of the firmware upgrade file in the volatile memory before writing it to the persistent memory, critical data can be checked before it is written to persistent memory. Thus, it is possible to check if the data represents a correct firmware upgrade file and if the data is intended for the product related to the embedded system.

In a preferred embodiment of the invention, the virtual file system of the embedded system is mapped within the client computer. Thereby no specially designed programs have to be used at the client computer. Thus, both time and memory space of the client computer is saved.

According to a specific embodiment of the method of the invention, the entire firmware upgrade file is stored in the volatile memory of the embedded system before it is written to the persistent memory. Thereby an error in the firmware upgrade file can be identified, e.g. by letting control means check the file, before the file replaces the firmware currently stored in the persistent memory. Such errors are generally a result of interruptions in network traffic or other network related errors.

### Brief Description of the Drawings

Other features and advantages of the present invention will become apparent from the following detailed description of a presently preferred embodiment, with reference to the accompanying drawings.
Fig. 1 is a schematic diagram of an environment of the embedded system of the invention.
Fig. 2 is a schematic diagram of an embedded system and a client computer during an upgrade of firmware of the embedded system.
Fig. 3 is a detailed view of a portion of the embedded system shown in Fig. 2
Fig. 4 is a diagram showing events according to the method of the invention.

### Detailed Description of a Presently Preferred Embodiment

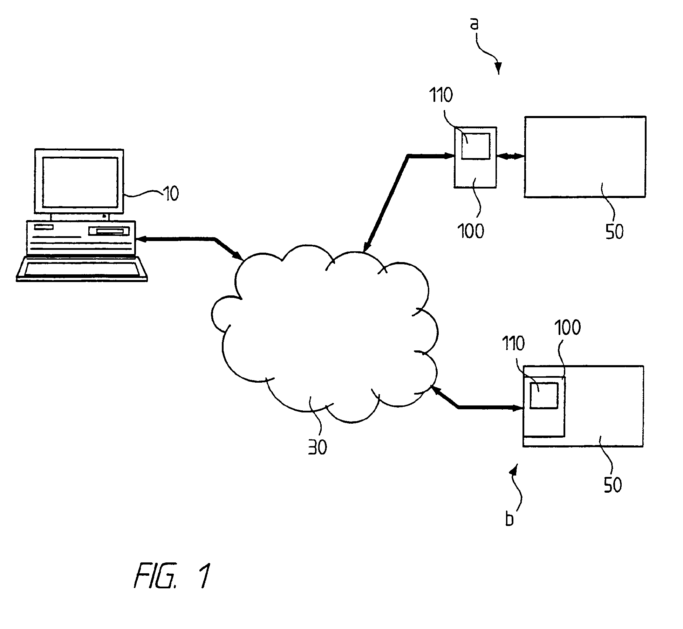

Referring to Fig. 1, an environment of the invention is shown where a client computer 10 and servers 100 are connected to a network 30. The servers 100 each provide a device 50 with means for communication with the client computer 10 over the network 30. The client computer 10 described herein could be any client computer of a plurality of client computers connected to the network 30. The servers 100 each comprise an embedded system 110 performing the processing of the servers 100. A firmware upgrade is started at the client computer 10 and is directed to one embedded system 110.

A server 100, comprising the embedded system 110, enables devices 50 to be reached or shared via the network. The server 100 could be built in to a device 50, arrangement b, or could be external to a device 50, arrangement a.

A device 50 can be any device that could be interesting to connect to a network. For example, it could be an industrial robot, a control unit or a gauge for a process or a peripheral device, such as a printer, a modem, a scanner, a fax machine, a photocopier or a multifunction peripheral.

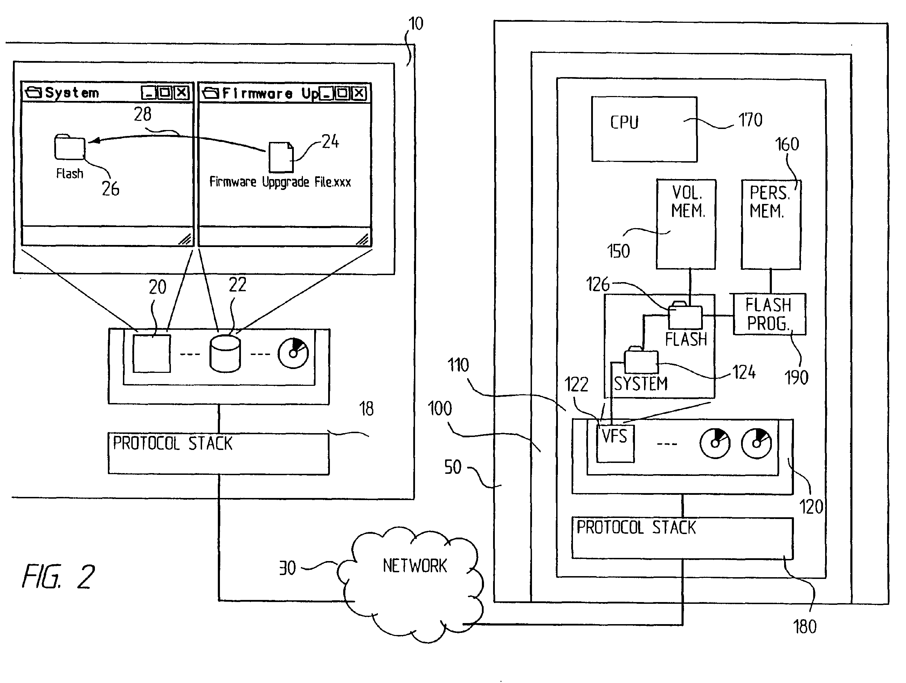

Now referring to Fig. 2, the embedded system 110 of the preferred embodiment comprises a file system 120, a volatile memory 150, a persistent memory 160, a central processing unit 170 (CPU), at least one protocol stack 180 and a programmer 190.

Within the file system 120 a virtual file system 122 (VFS) is implemented and in the virtual file system a directory for upgrading 126, hereinafter called "FLASH", is provided. In the preferred embodiment of the invention the FLASH directory 126 is a subdirectory to a directory 124 called "SYSTEM", which also comprises other resources.

The volatile memory 150 is a memory that loses the information stored therein when the power to it is switched off and it is used to store temporary data. The persistent memory 160 is a reprogrammable memory where stored data is preserved even when the power to it is switched off. In the preferred embodiment the persistent memory 160 is a flash memory but could be any reprogrammable memory preserving data after the power has been switched of. The CPU 170 is processing the functions, protocols, etc of the embedded system. The protocol stack 180 contains the protocols for communication over the network. The programmer 190, herein after called flash programmer 190, is a means for writing code into the persistent memory 160.

The client computer 10 comprises an operating system having a file system 18 allowing mapping of resources 20 shared over the network 30.

The server 100 related to the device 50 is mapped within the file system of the client computer.

The server 100 is generally mapped in the file system 18 for other purposes than firmware upgrading. If, for example, the device 50 served by the server is a file storage device, the storage area is generally accessible from the client computer by the use of ordinary file handling commands of the operating system of the client computer 10. Thus, there is established a pointer from the file system 18 of the client computer 10 to a root directory of the file system 120 of the embedded system 110 of the server 100. Thereby, the subdirectories of the file system 120 of the embedded system 110 also are available within the file system 18 of the client computer 10. If the server 110 is not already mapped in the file system 18 of the client computer 10 for normal operation of the device 50, then the server 100 has to be mapped at the client computer 10 before performing the upgrading operation according to the invention.

This arrangement results in the directories of the embedded system 110 being possible to handle within the file structure of the operating system of the client computer 10. Further, the directories of the embedded system 110 can be accessed as if they where directories of the client computer 10, using ordinary file handling commands .

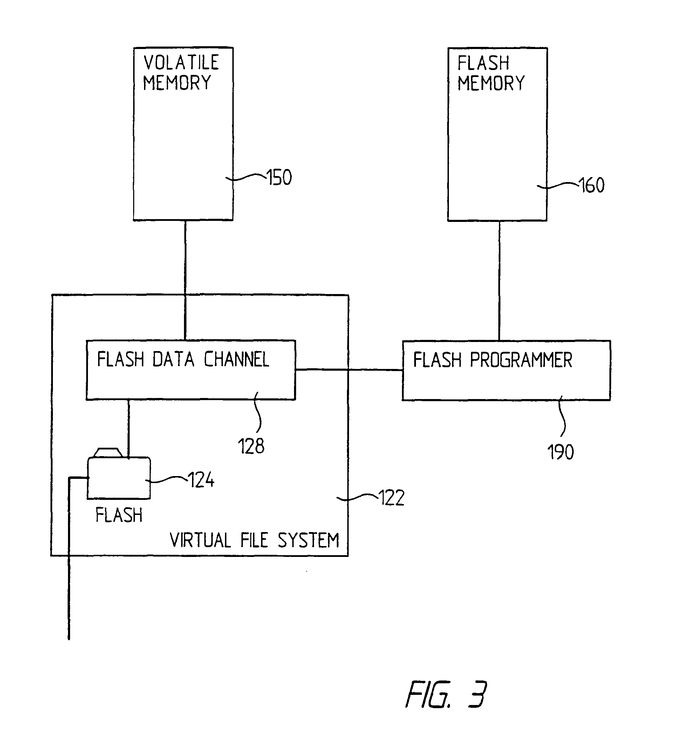

Referring now to Fig. 3, showing the FLASH directory 126 within the virtual file system 122 of the embedded system 110. There is a control means, realised by a data channel 128, associated with the FLASH directory 126. Hereinafter this data channel 128 is referred to as flash data channel 128. The flash data channel 128 is reset every time the FLASH directory 126 is accessed. The flash channel is allocated a portion of the volatile memory 150 for storing data. The flash data channel 128 handles all data sent to the FLASH directory 126 and is specially designed to handle firmware upgrade files and to perform various control operations on the data received.

To perform said control operations the flash data channel 128 comprises means for checking the characteristics of the file, namely first checking means, second checking means and third checking means, and means for storing data of a file in the volatile memory 150. Said checking and storing means are realised by program code related to the flash data channel 128 .The first checking means checks if the file is a firmware upgrade file by checking for a "magic number", described below. The second checking means checks if the file stored in the volatile memory 150 is intended for the product related to the embedded system 110. The third checking means checks the checksum of the file to decide if there are any errors in the file.

Further the flash data channel 128 provides a flash programmer 190 with the approved firmware upgrade files to have the firmware upgrade file written to the persistent memory 160. A more detailed description of the functions of the flash data channel is found below, in the description of the method.

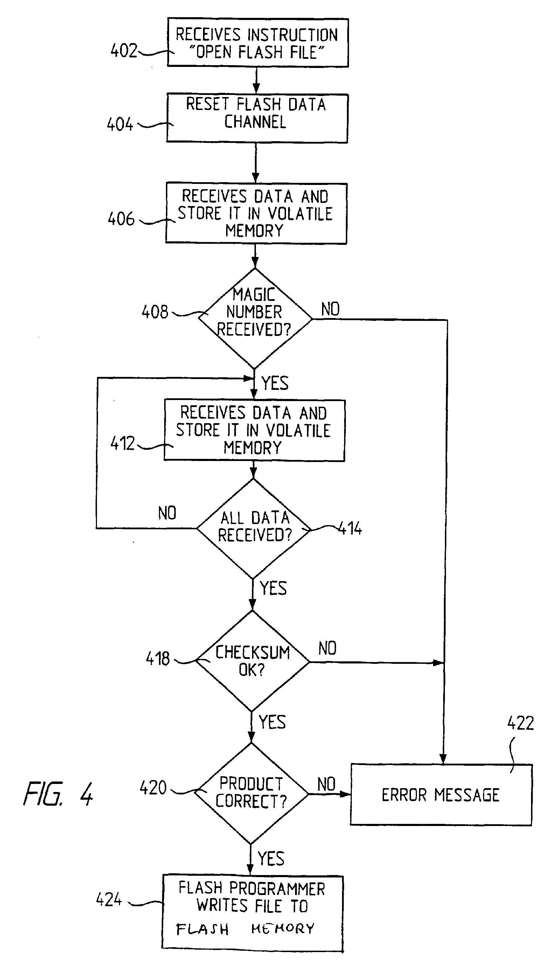

Now referring to Figs. 2 and 4, describing the preferred method for upgrading firmware. We presume that the server 100 has been mapped in the file system 18 of the client computer 10.

Let us assume that an user is interested in upgrading the firmware of a server with a firmware upgrade file 24, which he has received from the manufacturer of the server 100 and has stored on the hard disk 22 of the client computer 10. It should be understood that the firmware upgrade file of course could be stored on any storage unit accessible from the client computer 10.

The user then uses the ordinary file handling commands, for the present operating system, to copy or move the firmware upgrade file 24 to the FLASH directory. In the preferred embodiment the individual "drags and drops" 28 the firmware upgrade file 24 to the representation of the FLASH directory 26 within the client computer.

The client computer 10 thereafter sends an instruction to the embedded system telling it to open a flash file, step 402, within the virtual file system 122 of the embedded system.

Thereafter, the flash data channel is reset, step 404, and data of the firmware upgrade file 24 is received and stored, step 406, in the volatile memory 150. The flash data channel controls the data during reception, step 408, checking for an identifier in the form of "a magic number" corresponding to an identifier confirming that the data received belongs to a firmware upgrade file.

The check, in step 408, for a magic number identifying the data as a firmware upgrade file, checks a predefined position in the data file for the "magic number". Preferably the magic number is positioned at the beginning of the firmware upgrade file.

If the magic number corresponding to a firmware upgrade file does not occur at the predefined position in step 408, then the data of the file does not belong to a firmware upgrade file. As a result thereof an error message is sent, step 422, to the client and the file transmission is terminated.

If a magic number corresponding to a firmware upgrade file 24 is received, step 408, then the reception of data continues, steps 412, 414, until all data of the firmware upgrade file is stored in the volatile memory 150.

When all data of a firmware upgrade file has been received the flash data channel controls the checksum, step 418, of the received file. If the checksum is not correct then the received file is corrupt. As a result thereof an error message is sent, step 422, to the client computer and the upgrading operation of the embedded system is terminated.

If the checksum is correct then the flash data channel is checking, step 420, for a product identifier within the file telling what product the firmware upgrade file is intended for. If the identifier does not correspond to the server product then an error message is sent, step 422, to the client computer and the upgrading operation of the embedded system is terminated.

If the product identifier is correct, then the flash programmer 190 is ordered to erase at least a portion of the memory and then write, step 424, the firmware upgrade file in the volatile memory 150 to the flash memory 160. When the firmware upgrade file has been written to the flash memory 160 the flash file is closed, which is indicated at the client computer in a similar way as when an ordinary file transfer has been completed.

## Claims

1. A method for upgrading firmware of an embedded system (110) over a network connection, comprising the steps of:
sharing a virtual file system (122) of the embedded system (110) with a client computer (10) via the network connection in such a way that the virtual file system (122) can be utilised by the operating system of the client computer (10) as if it was part of the file system of the client computer (10),
receiving (406) data of a firmware upgrade file in a directory for upgrading (126) at the virtual file system (122) of the embedded system (110) via the network connection, said directory for upgrading (126) being associated with a data channel (128) being a control means,
performing control operations by means of the data channel (128) on the data of the firmware upgrade file received in the directory for upgrading (126),
storing (406) the data of the firmware upgrade file in a volatile memory (150) of the embedded system (110) connected to the virtual file system (122), and
writing (424) the firmware upgrade file from the volatile memory (150) to a persistent memory (160) of the embedded system (110).

2. Method according to claim 1, further comprising the step of controlling (408) if data received at the virtual file system (122) corresponds to a firmware upgrade file.

3. Method according to claim 2, further comprising, when the data received corresponds to a firmware upgrade file, the step of checking (420) if the stored firmware upgrade file is intended for the product type of the device (50).

4. Method according to claim 2 or 3, further comprising, when the data received corresponds to a firmware upgrade file, the step of checking (418) the checksum of the received file.

5. Method according to claim 2, comprising the step of sending an error message (422) when the data received does not correspond to a firmware upgrade file.

6. Method according to claim 3, comprising the step of sending an error message (422) when the stored firmware upgrade file is not intended for the product type of the device (50).

7. Method according to any of claims 2-4, comprising the step of sending an error message (422) from the embedded system (110) to the client computer (10) when the data received does not correspond to a valid firmware upgrade file.

8. Method according to any of claims 1-7, comprising the step of erasing at least a portion of the persistent memory (160) after reception of a correct firmware upgrade file and before writing (424) said file to the persistent memory (160).

9. Method according to any of claims 1-8, wherein the protocols (180) used during the reception of the firmware upgrade file are the protocols (180) previously used by the device (50) during the normal operation.

10. Method according to any of claims 1-9, wherein the received data of a firmware upgrade file is controlled by a data channel (128) of the virtual file system (122).

11. Method according to any of claims 1-10, wherein the step of writing (424) the firmware upgrade file from the volatile memory (150) to the persistent memory (160) is preceded by all data of the firmware upgrade file being located in the volatile memory (150).

12. Method according to any of claims 1-11, wherein the virtual file system (122) is mapped within a client computer (10) in such way that the virtual file system (122) can be utilised within the operating system of the client computer (10).

13. Method according to any one of claims 1-12, further comprising the step sending data of the firmware upgrade file over the network (30) from the client computer (10) to the embedded system (110) as a result of the upgrade file being copied or moved (28) to a directory (26) within the file system (18) of the client computer (10), which directory (26) represents a link to the virtual file system (122) of the embedded system (110).

14. An embedded system (110) comprising:
a volatile memory (150),
a persistent memory (160),
a protocol stack (180) for communication over a network (30),
means for upgrading firmware received over a network (30), and
means for writing the firmware upgrade file from the volatile memory to the persistent memory, said embedded system being **characterised by**:
a virtual file system (122) being shareable with an operating system of a client computer (10) via the network (30) and being connected to the volatile memory (150),
a directory for upgrading being included in said virtual file system, and
a data channel associated with said directory for upgrading, the data channel being a control means arranged to handle data of a firmware upgrade file sent to the directory for upgrading, and arranged to perform control operations on the data of the firmware upgrade file received.

15. A system (110) according to claim 14, the control means (128) for controlling a file intended for the virtual file system (122),
wherein the control means (128) comprises
means for checking the characteristics of the file, and
means for storing a file in the volatile memory (150).

16. A system (110) according to claim 15, wherein the control means (128) is arranged to control a file intended for the upgrading directory (126).

17. A system (110) according to claim 15 or 16,
wherein a first means for checking the characteristics of the file is arranged to check that the file is a firmware upgrade file.

18. A system (110) according to any one of claims 15-17, wherein a second means for checking the characteristics of the file is arranged to check that a received firmware upgrade file is a firmware upgrade file intended for the product the embedded system (110) is representing.

19. A system (110) according to any one of claims 15-18, wherein a third means for checking the characteristics of the file is arranged to check the checksum of a received firmware upgrade file.

20. A system (110) according to any one of claims 14-19, wherein a common protocol stack (180) for communication over the network (30) is used during normal operation and during download.

## Patentansprüche

1. Verfahren zum Aufrüsten von Firmware eines eingebetteten Systems (110) über eine Netzwerkverbindung, die Schritte umfassend zum:
gemeinsamen Nutzen eines virtuellen Dateisystems (122) des eingebetteten Systems (110) mit einem Client-Computer (10) über die Netzwerkverbindung derart, dass das virtuelle Dateisystem (122) von dem Betriebssystem des Client-Computers (10) so eingesetzt werden kann, als ob es ein Teil des Betriebssystems des Client-Computers (10) wäre,
Empfangen (406) von Daten einer Firmware-Aufrüstungsdatei in einem Verzeichnis zum Aufrüsten (126) des virtuellen Dateisystems (122) des eingebetteten Systems (110) über die Netzwerkverbindung, wobei das Verzeichnis zum Aufrüsten (126) einem Datenkanal (128) zugeordnet ist, der ein Steuerungsmittel ist,
Ausführen von Steuerungsvorgängen mithilfe des Datenkanals (128) an den Daten der Firmware-Aufrüstungsdatei, die in dem Verzeichnis zum Aufrüsten (126) empfangen wurden,
Speichern (406) der Daten der Firmware-Aufrüstungsdatei in einem flüchtigen Speicher (150) des eingebetteten Systems (110), das mit dem virtuellen Dateisystem (122) verbunden ist, und
Schreiben (424) der Firmware-Aufrüstungsdatei aus dem flüchtigen Speicher (150) in einen permanenten Speicher (160) des eingebetteten Systems (110).

2. Verfahren nach Anspruch 1, ferner den Steuerungsschritt (408) umfassend, wenn die Daten, die am virtuellen Dateisystem (122) empfangen wurden, einer Firmware-Aufrüstungsdatei entsprechen.

3. Verfahren nach Anspruch 2, das dann, wenn die empfangenen Daten einer Firmware-Aufrüstungsdatei entsprechen, ferner den Überprüfungsschritt (420) umfasst, ob die gespeicherte Firmware-Aufrüstungsdatei für den Produkttyp der Einrichtung (50) vorgesehen ist.

4. Verfahren nach Anspruch 2 oder 3, ferner den Schritt zum Überprüfen (418) der Prüfsumme der empfangenen Datei umfassend, wenn die empfangenen Daten einer Firmware-Aufrüstungsdatei entsprechen.

5. Verfahren nach Anspruch 2, den Schritt zum Senden einer Fehlernachricht (422) umfassend, wenn die empfangenen Daten nicht einer Firmware-Aufrüstungsdatei entsprechen.

6. Verfahren nach Anspruch 3, den Schritt zum Senden einer Fehlernachricht (422) umfassend, wenn die gespeicherte Firmware-Aufrüstungsdatei nicht für den Produkttyp der Einrichtung (50) vorgesehen ist.

7. Verfahren nach einem der Ansprüche 2-4, den Schritt zum Senden einer Fehlernachricht (422) aus dem eingebetteten System (110) an den Client-Computer (10) umfassend, wenn die empfangenen Daten nicht einer gültigen Firmware-Aufrüstungsdatei entsprechen.

8. Verfahren nach einem der Ansprüche 1-7, den Schritt zum Löschen mindestens eines Teils des permanenten Speichers (160) nach dem Empfangen einer korrekten Firmware-Aufrüstungsdatei und vor dem Schreiben (424) der Datei in den permanenten Speicher (160) umfassend.

9. Verfahren nach einem der Ansprüche 1-8, wobei die Protokolle (180), die während des Empfangs der Firmware-Aufrüstungsdatei verwendet werden, die Protokolle (180) sind, die zuvor von der Einrichtung (50) während des Normalbetriebs verwendet wurden.

10. Verfahren nach einem der Ansprüche 1-9, wobei die empfangenen Daten einer Firmware-Aufrüstungsdatei durch einen Datenkanal (128) des virtuellen Dateisystems (122) gesteuert werden

11. Verfahren nach einem der Ansprüche 1-10, wobei dem Schritt zum Schreiben (424) der Firmware-Aufrüstungsdatei aus dem flüchtigen Speicher (150) in den permanenten Speicher (160) alle Daten der Firmware-Aufrüstungsdatei vorausgehen, die in dem flüchtigen Speicher (150) liegen.

12. Verfahren nach einem der Ansprüche 1-11, wobei das virtuelle Dateisystem (122) in einem Client-Computer (10) derart abgebildet ist, dass das virtuelle Dateisystem (122) in dem Betriebssystem des Client-Computers (10) eingesetzt werden kann.

13. Verfahren nach einem der Ansprüche 1-12, ferner den Schritt umfassend zum Senden von Daten der Firmware-Aufrüstungsdatei über das Netzwerk (30) aus dem Client-Computer (10) an das eingebettete System (110) als ein Ergebnis dessen, dass die Firmware-Aufrüstungsdatei in ein Verzeichnis (26) im Dateisystem (18) des Client-Computers (10) kopiert oder verschoben (28) wird, wobei das Verzeichnis (26) eine Verbindung zu dem virtuellen Dateisystem (122) des eingebetteten Systems (110) darstellt.

14. Eingebettetes System (110) mit:
einem flüchtigen Speicher (150),
einem permanenten Speicher (160),
einem Protokollstapel (180) für die Kommunikation über ein Netzwerk (30) und
Mitteln zum Aufrüsten von Firmware, die über ein Netzwerk (30) empfangen wurden, und
Mitteln zum Schreiben der Firmware-Aufrüstungsdatei aus dem flüchtigen Speicher in den permanenten Speicher, wobei das eingebettete System **gekennzeichnet ist durch**:
ein virtuelles Dateisystem (122), das über das Netzwerk (30) mit einem Betriebssystem eines Client-Computers (10) gemeinsam nutzbar ist und das mit dem flüchtigen Speicher (150) verbunden wird,
ein Verzeichnis zum Aufrüsten, dass in dem virtuellen Dateisystem enthalten ist, und
einen Datenkanal, der dem Verzeichnis zum Aufrüsten zugeordnet ist, wobei der Datenkanal ein Steuerungsmittel ist, das eingerichtet ist, mit den Daten einer Firmware-Aufrüstungsdatei umzugehen, die dem Verzeichnis zum Aufrüsten zugeschickt wurden, und eingerichtet ist, Steuerungsvorgänge an den Daten der empfangenen Firmware-Aufrüstungsdatei auszuführen.

15. System (110) nach Anspruch 14, wobei das Steuerungsmittel (128) für das Steuern einer Datei für das virtuelle Dateisystem (122) vorgesehen ist,
wobei das Steuerungsmittel (128) umfasst:
Mittel zum Prüfen der Kenngrößen der Datei und
Mittel zum Speichern einer Datei in dem flüchtigen Speicher (150).

16. System (110) nach Anspruch 15, wobei das Steuerungsmittel (128) eingerichtet ist, eine Datei zu steuern, die für das Aufrüstungsverzeichnis (126) vorgesehen ist.

17. System (110) nach Anspruch 15 oder 16, wobei ein erstes Mittel zum Überprüfen der Kenngrößen der Datei eingerichtet ist, zu überprüfen, dass die Datei eine Firmware-Aufrüstungsdatei ist.

18. System (110) nach einem der Ansprüche 15 - 17, wobei ein zweites Mittel zum Überprüfen der Kenngrößen der Datei eingerichtet ist, zu überprüfen, dass eine empfangene Firmware-Aufrüstungsdatei eine Firmware-Aufrüstungsdatei ist, die für das Produkt des eingebetteten Systems (110) repräsentierend ist.

19. System (110) nach einem der Ansprüche 15 - 18, wobei ein drittes Mittel zum Überprüfen der Kenngrößen der Datei eingerichtet ist, die Prüfsumme einer empfangenen Firmware-Aufrüstungsdatei zu überprüfen.

20. System (110) nach einem der Ansprüche 14 - 19, wobei während des Normalbetriebs und während des Herunterladens für die Kommunikation über das Netzwerk (30) ein gemeinsamer Protokollstapel (180) verwendet wird.

## Revendications

1. Procédé de mise à niveau de micrologiciel dans un système intégré (110) sur une connexion de réseau, comprenant les étapes de :
le partage d'un système de fichiers virtuel (122) du système intégré (110) avec un ordinateur client (10) par l'intermédiaire de la connexion de réseau de telle manière que le système de fichiers virtuel (122) puisse être utilisé par le système d'exploitation de l'ordinateur client (10) comme s'il faisait partie du système de fichiers de l'ordinateur client (10),
la réception (406) de données d'un premier fichier de mise à niveau de micrologiciel dans un répertoire de mise à niveau (126) au niveau du système de fichiers virtuel (122) du système intégré (110) par l'intermédiaire de la connexion de réseau, ledit répertoire de mise à niveau (126) étant associé à un canal de données (128) étant un moyen de contrôle,
l'exécution d'opérations de contrôle au moyen du canal de données (128) sur les données du fichier de mise à niveau de micrologiciel reçu dans le répertoire de mise à niveau (126),
la mémorisation (406) des données du fichier de mise à niveau de micrologiciel dans une mémoire volatile (150) du système intégré (110) connecté au système de fichiers virtuel (122), et
l'écriture (424) du fichier de mise à niveau de micrologiciel de la mémoire volatile (150) dans une mémoire persistante (160) du système intégré (110).

2. Procédé selon la revendication 1, comprenant en outre l'étape du contrôle (408) si des données reçues au système de fichiers virtuel (122) correspondent à un fichier de mise à niveau de micrologiciel.

3. Procédé selon la revendication 2, comprenant en outre, lorsque les données reçues correspondent à un fichier de mise à niveau de micrologiciel, l'étape de la vérification (420) si le fichier de mise à niveau de micrologiciel mémorisé est destiné au type de produit du dispositif (50).

4. Procédé selon la revendication 2 ou 3, comprenant en outre, lorsque les données reçues correspondent à un fichier de mise à niveau de micrologiciel, l'étape de la vérification (418) de la somme de contrôle du fichier reçu.

5. Procédé selon la revendication 2, comprenant l'étape de l'envoi d'un message d'erreur (422) lorsque les données reçues ne correspondent pas à un fichier de mise à niveau de micrologiciel.

6. Procédé selon la revendication 3, comprenant l'étape de l'envoi d'un message d'erreur (422) lorsque le fichier de mise à niveau de micrologiciel mémorisé n'est pas destiné au type de produit du dispositif (50).

7. Procédé selon l'une quelconque des revendications 2 à 4, comprenant l'étape de l'envoi d'un message d'erreur (422) du système intégré (110) à l'ordinateur client (10) lorsque les données reçues ne correspondent pas à un fichier de mise à niveau de micrologiciel valable.

8. Procédé selon l'une quelconque des revendications 1 à 7, comprenant l'étape de l'effacement d'au moins une portion de la mémoire persistante (160) après la réception d'un fichier de mise à niveau de micrologiciel correct et avant l'écriture (424) dudit fichier dans la mémoire persistante (160).

9. Procédé selon l'une quelconque des revendications 1 à 8, dans lequel les protocoles (180) utilisés pendant la réception du fichier de mise à niveau de micrologiciel sont les protocoles (180) précédemment utilisés par le dispositif (50) pendant le fonctionnement normal.

10. Procédé selon l'une quelconque des revendications 1 à 9, dans lequel les données reçues d'un fichier de mise à niveau de micrologiciel sont contrôlées par un canal de données (128) du système de fichiers virtuel (122).

11. Procédé selon l'une quelconque des revendications 1 à 10, dans lequel l'étape de l'écriture (424) du fichier de mise à niveau de micrologiciel de la mémoire volatile (150) dans la mémoire persistante (160) est précédée de la localisation de toutes les données du fichier de mise à niveau de micrologiciel dans la mémoire volatile (150).

12. Procédé selon l'une quelconque des revendications 1 à 11, dans lequel le système de fichiers virtuel (122) est mappé à l'intérieur d'un ordinateur client (10) de telle manière que le système de fichiers virtuel (122) puisse être utilisé à l'intérieur du système d'exploitation de l'ordinateur client (10).

13. Procédé selon l'une quelconque des revendications 1 à 12, comprenant en outre l'étape de l'envoi de données du fichier de mise à niveau de micrologiciel sur le réseau (30) de l'ordinateur client (10) au système intégré (110) en conséquence de la copie ou du déplacement (28) du fichier de mise à niveau dans un répertoire (26) à l'intérieur du système de fichiers (18) de l'ordinateur client (10), lequel répertoire (26) représentant un lien vers le système de fichiers virtuel (122) du système intégré (110).

14. Système intégré (110) comprenant :
une mémoire volatile (150),
une mémoire persistante (160),
une pile de protocoles (180) pour communiquer sur un réseau (30),
un moyen de mise à niveau de micrologiciel reçu sur un réseau (30), et
un moyen d'écriture du fichier de mise à niveau de micrologiciel de la mémoire volatile dans la mémoire persistante, ledit système intégré étant **caractérisé par** :
un système de fichiers virtuel (122) pouvant être partagé avec un système d'exploitation d'un ordinateur client (10) par l'intermédiaire du réseau (30) et étant connecté à la mémoire volatile (150),
un répertoire de mise à niveau étant inclus dans ledit système de fichiers virtuel, et
un canal de données associé au dit répertoire de mise à niveau, le canal de données étant un moyen de contrôle agencé pour gérer des données d'un fichier de mise à niveau de micrologiciel envoyé au répertoire de mise à niveau, et agencé pour effectuer des opérations de contrôle sur les données du fichier de mise à niveau de micrologiciel reçu.

15. Système (110) selon la revendication 14, le moyen de contrôle (128) étant agencé pour contrôler un fichier destiné au système de fichiers virtuel (122),
dans lequel le moyen de contrôle (128) comprend :
un moyen pour vérifier les caractéristiques du fichier, et
un moyen pour mémoriser un fichier dans la mémoire volatile (150).

16. Système (110) selon la revendication 15, dans lequel le moyen de contrôle (128) est agencé pour contrôler un fichier destiné au répertoire de mise à niveau (126).

17. Système (110) selon la revendication 15 ou 16, dans lequel un premier moyen pour vérifier les caractéristiques du fichier est agencé pour vérifier que le fichier est un fichier de mise à niveau de micrologiciel.

18. Système (110) selon l'une quelconque des revendications 15 à 17, dans lequel un deuxième moyen pour vérifier les caractéristiques du fichier est agencé pour vérifier qu'un fichier de mise à niveau de micrologiciel reçu est un fichier de mise à niveau de micrologiciel destiné au produit que le système intégré (110) représente.

19. Système (110) selon l'une quelconque des revendications 15 à 18, dans lequel un troisième moyen pour vérifier les caractéristiques du fichier est agencé pour vérifier la somme de contrôle d'un fichier de mise à niveau de micrologiciel reçu.

20. Système (110) selon l'une quelconque des revendications 14 à 19, dans lequel une pile de protocoles commune (180) pour communiquer sur le réseau (30) est utilisée pendant un fonctionnement normal et pendant un téléchargement.
